(19) Europäisches Patentamt
European Patent Office
Office européen des brevets

(11) Veröffentlichungsnummer: **0 639 610 A1**

# (12) EUROPÄISCHE PATENTANMELDUNG

(21) Anmeldenummer: **94112116.2**

(22) Anmeldetag: **03.08.94**

(51) Int. Cl.⁶: **C08J 7/04**, //(C09D175/04, 123:28)

(30) Priorität: **16.08.93 DE 4327468**

(43) Veröffentlichungstag der Anmeldung:
**22.02.95 Patentblatt 95/08**

(84) Benannte Vertragsstaaten:
**DE ES FR GB IT SE**

(71) Anmelder: **BAYER AG**

**D-51368 Leverkusen (DE)**

(72) Erfinder: **Sirinyan, Kirkor, Dr.**
**Humperdinckstrasse 12**
**D-51467 Bergisch Gladbach (DE)**
Erfinder: **Petzoldt, Joachim, Dr.**
**Alfred-Delp-Strasse 4**
**D-40789 Monheim (DE)**
Erfinder: **Müller, Hanns Peter, Dr.**
**Hollweg 20**
**D-51519 Odenthal (DE)**

## (54) Verfahren zur Lackierung von Kunststoffen, lackierte Kunststoffe und die Verwendung von hierzu geeigneten Haftvermittlern.

(57) Ein Verfahren zur Lackierung von Kunststoffen unter Verwendung eines Beschichtungsmittels, welches neben einem Ein- oder Zweikomponenten-Bindemittel mindestens ein chemisch modifiziertes, Chlor enthaltendes Polyolefin als Haftvermittler a) und als weiteres Hilfsmittel b) OH-funktionelle, hydrophobe Ester aus (i) mehrwertigen Alkoholen und (ii) aliphatischen $C_8$-$C_{22}$-Monocarbonsäuren enthält, die nach diesem Verfahren lackierten Kunststoffe und die Verwendung von Kombinationen der vorstehend genannten Haftvermittler a) mit den vorstehend genannten Hilfsmitteln b) als die Haftvermittlung und die Lagerstabilität verbessernde Zusatzmittel in Kunststofflacken.

EP 0 639 610 A1

Die Erfindung betrifft ein neues Verfahren zur Lackierung von Kunststoffen unter Verwendung eines Beschichtungsmittels, welches als Haftvermittler bestimmte, chemisch modifizierte, vorzugsweise amorphe Polyolefine, insbesondere Polypropylene bzw. deren Co- und Terpolymerisate, mit Ethylen, Butadien und Isobuten in Kombination mit bestimmten, speziellen, OH-funktionellen, hydrophoben Estern als weitere Hilfsmittel enthalten, die so lackierten Kunststoffe und die Verwendung der genannten Hilfsmittel-Kombinationen als Haftvermittler in Kunststofflacken.

Zum Aufbringen von gut haftenden Lackauflagen auf Kunststoffen, insbesondere auf PP-(Polypropylen)-Spritzgußteilen, ist eine chemische oder physikalische Modifizierung der Substratoberflächen erforderlich. In diesem Zusammenhang seien Beflammen (vgl. beispielsweise F. Garbassi u.a., J. Mater Sci., 22, Seiten 207 bis 212(1987)), Coronabehandeln (vgl. beispielsweise F. Lawson,

Rubber Chem. and Technol., 60, 102 (1987)), Plasmabehandeln (vgl. beispielsweise L.H. Coopes et al J. Macromol. Chem., 17, Seiten 217 bis 226 (1982) und EP-A-0.282.094), Beizen mit Chromschwefelsäure (vgl. beispielsweise M. Salkauskas J. Appl. Polym. Sci., 26, Seiten 2097 bis 2098 (1981)) erwähnt. Ferner kann der Literatur entnommen werden, daß es möglich ist, durch Verwendung von Haftvermittlerauflagen auf Basis von chlorierten Polyolefinen (US-PS 3.676.391) oder MSA-modifizierten Polyolefinen (DE-OS 1.546.982) Kunststoffteile auf Basis von Polypropylen und Polyethylenen haftfest lackierbar zu machen.

Diese Methoden sind kostenintensiv und zudem bei Spritzgußteilen mit komplizierter Geometrie nicht anwendbar. Das Aufbringen von besagten Haftvermittlerauflagen ist neben den hohen Händlingskosten wegen des niedrigen Festkörpergehalts noch zusätzlich mit Umweltproblemen verbunden. Darüber hinaus ist ihre Anwendung auf bestimmte Lacksysteme beschränkt.

In der PCT-Anmeldung mit der Veröffentlichungsnummer WO 88/05346 wird vorgeschlagen, die Haftvermittlerauflagen mittels zusätzlicher Maßnahmen wie UV-Bestrahlung zu modifizieren, was auf einen zusätzlichen Aufwand hinausläuft.

Ein Beimengen von chlorierten Polyolefinen zu den Kunststofflacken, beispielsweise von herkömmlichen, chlorierten Polypropylenen, wie es in US-PS 2 468 480, EP-A-325 861 und DE-A-3 910 901 empfohlen wird, ist mit dem Nachteil verbunden, daß solche chlorierten Polyolefine mit den üblichen Kunststofflacken nur schlecht verträglich sind. Ferner ist ihre Löslichkeit in üblichen Lacklösungsmitteln sehr gering, was die praktische Verarbeitbarkeit negativ beeinträchtigt.

Die DE-A-39 09 217 empfiehlt, chemisch modifiziertes, amorphes Polyolefin - der auch erfindungsgemäß einzusetzenden Art - als Haftvermittler zu verwenden. Die alleinige Verwendung dieser Verbindungen als Haftvermittler ist jedoch mit dem Nachteil behaftet, daß diese Zusatzmittel nicht ausreichend sedimentstabil in die Kunststofflacke eingearbeitet werden können, so daß sie alsbald sedimentieren und damit ihre Wirksamkeit verlieren.

Aus diesem Grund wird in DE-A-39 39 760 vorgeschlagen, diese Nachteile mit Hilfe von Hilfsmitteln auf Epoxidharz-Basis zu beheben. Die Verwendung dieser speziellen Hilfsmitteln führt jedoch zu einer negativen Beeinträchtigung der mechanischen Eigenschaften der letztendlich erhaltenen Lacküberzüge, ganz abgesehen von dem Umstand, daß Epoxidharze und insbesondere das zu ihrer Herstellung eingesetzte Epichlorhydrin toxische Substanzen darstellen.

Es war daher die der Erfindung zugrundeliegende Aufgabe, ein neues Lacksystem zur Lackierung von Kunststoffen zur Verfügung zu stellen, welches zur Herstellung von hochwertigen, gut haftenden Lacküberzügen geeignet ist, ohne mit den Nachteilen der genannten Systeme des Standes der Technik behaftet zu sein.

Diese Aufgabe konnte durch die Bereitstellung des nachstehend näher beschriebenen erfindungsgemäßen Verfahrens bzw. die Verwendung der nachstehend näher beschriebenen Kombination von erfindungsgemäßen Haftvermittlern mit bestimmten OH-funktionellen Estern gelöst werden.

Gegenstand der Erfindung ist ein Verfahren zur Lackierung von Kunststoffen unter Verwendung eines Beschichtungsmittels, welches neben einem Ein- oder Zweikomponenten-Bindemittel mindestens einen Haftvermittler a) in einer Menge von 1 bis 25 Gew.-%, bezogen auf das Gewicht des lösungsmittelfreien Bindemittels enthält, wobei der Haftvermittler ein chemisch modifiziertes Polyolefin mit einer mittleren Molmasse Mw von 10.000 bis 100.000 g/Mol, einem Chlorgehalt von 2,5 bis 50 Gew.-% und gegebenenfalls einem Gehalt an Stickstoff, Sauerstoff, Schwefel und/oder Silicium in Form von chemisch eingebauten funktionellen Gruppen von insgesamt 0 bis 15,0 Gew.-% darstellt, dadurch gekennzeichnet, daß man als weiteres Hilfsmittel b), gegebenenfalls neben sonstigen zusätzlich eingesetzten Hilfs- und Zusatzmitteln c), OH-funktionelle, hydrophobe Ester aus (i) mehrwertigen Alkoholen und (ii) aliphatischen $C_8$-$C_{22}$-Monocarbonsäuren des OH-Zahlbereichs 50-600 in einer Menge von 20 bis 80 Gew.-%, bezogen auf das Gesamtgewicht der Zusatzmittel a) + b), verwendet.

Gegenstand der Erfindung sind auch die so erhaltenen lackierten Kunststoffe.

Gegenstand der Erfindung ist schließlich auch die Verwendung von Kombinationen aus

a) chemisch modifizierten Polyolefinen einer mittleren Molmasse Mw von 10.000 bis 100.000 g/Mol, einem Chlorgehalt von 2,5 bis 50 Gew.-% und gegebenenfalls einem Gehalt an Stickstoff, Sauerstoff, Schwefel und/oder Silicium in Form von chemisch eingebauten funktionellen Gruppen von insgesamt 0 bis 15 Gew.-%,

und

b) aus 20 bis 80 Gew.-%, bezogen auf das trockene Gewicht der Komponenten a) + b), OH-funktionellen, hydrophoben Estern aus (i) mehrwertigen Alkoholen und (ii) aliphatischen $C_8$-$C_{22}$-Monocarbonsäuren des OH-Zahlbereichs 50 bis 600

als die Haftvermittlung und Lagerstabilität verbessernde Zusatzmittel in Kunststofflacken auf Basis von Ein- oder Zweikomponenten-Bindemitteln.

Die erfindungsgemäß zu verwendenden Kombinationen bestehen aus den Komponenten a) + b), wobei die Komponente b) in einer Menge von 20 bis 80 Gew.-%, vorzugsweise 50 bis 75 Gew.-%, bezogen auf das Gesamtgewicht der Einzelkomponenten a) + b) vorliegen.

Bei der Durchführung des erfindungsgemäßen Verfahrens werden die Haftvermittler a) in einer Menge von 1 bis 25, vorzugsweise 2,5 bis 7,5 Gew.-%, bezogen auf das lösungsmittelfreie Bindemittel eingesetzt. Die Menge der Komponente b) wird im Rahmen der obengemachten Ausführungen vorzugsweise so bemessen, daß in den Beschichtungsmitteln 2,5 bis 35 Gew.-%, vorzugsweise 2,5 bis 15 Gew.-% der Komponente b) bezogen auf das Gewicht der lösungsmittelfreien Bindemittel vorliegen.

Bei den erfindungswesentlichen Haftvermittlern a) handelt es sich um chemisch modifizierte, gegebenenfalls chlorhaltige amorphe Polyolefine, vorzugsweise chemisch modifizierte, amorphe Polypropylene mit einer mittleren, gelpermeationschromatographisch unter Verwendung von Polystyrol als Standard ermittelbaren Molmasse Mw 10 000 bis 100 000, vorzugsweise 15 000 bis 60 000 und besonders bevorzugt 17 000 bis 40 000 g/Mol, vorzugsweise mit einer Uneinheitlichkeit $U = M_w/Mn-1$ von 1,0 bis 6,5, besonders bevorzugt 1,5 bis 4,5, mit einem Gehalt an chemisch gebundenem Chlor von 2,5 bis 50, vorzugsweise 15 bis 40 Gew.-%, ganz besonders bevorzugt 20 bis 35 Gew.-%, und einem Gehalt an Stickstoff, Sauerstoff, Schwefel und/oder Silicium in Form von diese Elemente aufweisenden funktionellen Gruppen von insgesamt 0 bis 15, vorzugsweise 2,5 bis 15 und besonders bevorzugt 2,5 bis 7,5 Gew.-%. Insbesondere diese funktionellen Gruppen sind für die ausgezeichnete Verträglichkeit der erfindungsgemäßen Additive mit den herkömmlichen Lacksystemen bzw. die gute Löslichkeit in herkömmlichen Lacklösungsmitteln verantwortlich. Außerdem wird durch diese funktionellen Gruppen eine gute physikalische Fixierung des Additivs in der Lackmatrix gewährleistet.

Gut geeignete funktionelle Gruppen sind beispielsweise Carboxyl-, Carbonsäureanhydrid-, Carbonsäureester-, Carbonsäureamid-, Carbonsäureimid-, Amino-, Aldehyd-, Keton-, Sulfonsäureester-, Hydroxy-, Hydroperoxid- oder Alkoxysilangruppen oder auch heterocyclische Gruppierungen wie Imidazol-, Carbazol- oder Pyridinylgruppen oder schließlich auch aktivierte Doppelbindungen wie Vinylsulfonyl-oder Vinylaminogruppen, sowie schließlich auch Mercaptogruppen. Ganz besonders gut geeignete funktionelle Gruppen sind Hydroxyl-, Hydroperoxy-(H-O-O-), Carboxyl-, Carbonsäureanhydrid-, Carbonsäureamid-, Carbonsäureamidimid-, Carbonsäureester-, Amino- und Alkoxysilan-, vorzugsweise Trimethoxysilangruppen.

Bezüglich der Eignung der beispielhaft genannten funktionellen Gruppen ist lediglich darauf zu verweisen, daß diese unter üblichen Lagerungsbedingungen bei Anwesenheit von Luftsauerstoff, Feuchtigkeit und erhöhten Temperaturen bis 120 °C keine Reaktionen mit sich selbst oder mit den Lackkomponenten eingehen dürfen, mit denen sie abgemischt werden.

Zur Herstellung der chemisch modifizierten Haftvermittler werden als Ausgangsmaterialien vorzugsweise amorphe Polypropylene der Molmasse 10 000 bis 120 000 g/Mol und der Uneinheitlichkeit 1,0 bis 7,5 eingesetzt. Es ist jedoch auch möglich, als "Polyolefine" entsprechende amorphe Copolymerisate des Propylen mit anderen olefinisch ungesättigten Monomeren wie beispielsweise Ethylen, Isopren, Isobuten, Butadien-1,2 und/oder Butadien-1,4 oder auch entsprechende amorphe Polyethylene der genannten Molmasse- und Uneinheitlichkeits-Bereiche einzusetzen, wobei bei der Herstellung der genannten Copolymerisate des Propylens die Comonomeren in Mengen von bis zu 25 Gew.-%, bezogen auf das Gewicht aller Monomeren zum Einsatz gelangen können.

Die Einführung von Chlor erfolgt in an sich bekannter Weise durch Chlorierung der als Ausgangsmaterial dienenden amorphen Polyolefine (vgl. hierzu Houben-Weyl, Methoden der organischen Chemie, Band V/3, Seiten 511-551, Georg Thieme Verlag, Stuttgart (1962)). Zur Herstellung der erfindungsgemäßen Additive wird die Chlorierung bei Temperaturen von ca. -10 °C bis zum jeweiligen Siedepunkt des eingesetzten Lösungsmittels vorgenommen.

Der Einbau der funktionellen Gruppen kann durch Umsetzung mit herkömmlichen Peroxiden (Einbau von Hydroperoxid- oder Carboxylgruppen) bzw. durch radikalisch initiierte Pfropfreaktion mit Monomeren, die erfindungsgemäße funktionelle Gruppen aufweisen, vorgenommen werden. Als Initiator für diese Pfropfreaktion können Peroxide oder Azoverbindungen der hierfür an sich bekannten Art verwendet werden. Die Modifizierungsreaktionen sind an sich bekannt und werden beispielsweise in folgenden Literaturstellen beschrieben: G.A. Russel, J. Am. Chem. Soc., 79, 3871 (1957), M. Iring et al., Polymer Degradation and Stability, 5,467(1983), N.G. Gaylord, Journal of Polymer Science, Polymer Letters Edition, Vol. 21, 23-30 (1983), A. Neyishi et al, J. of Appl. Poly. Sci. 22, 2953 (1978), A. Hoff, J. of Appl. Poly. Sci., 29, 465 (1984).

Geeignete Initiatoren sind beispielsweise Kaliumperoxodisulfat, Azo-bisisobutyronitril, t-Butylperbenzoat, t-Amyl-perneodecanoat, p-Benzodinen, t-Butylperisononanoat, Di-2-ethylhexyl-peroxydicarbonat oder Di-n-butylperoxydicarbonat.

Geeignete Monomere mit funktionellen Gruppen wären beispielsweise Allylamin, Allylalkohol, Trimethoxyvinylsilan, Triethoxyvinylsilan, Ethylallylether, Cyclohexen-1-dicarbonsäureanhydrid-4, Maleinsäureanhydrid, Maleinsäuredimethyl-, -diethyl-, -dipropyl- und -dibutylester bzw. deren Säureamide wie Maleinsäurediethylamid usw., n-Alkyl-Maleinsäureimide beispielsweise n-Propyl-Maleinsäureimid oder n-Butyl-Maleinsäureimid, Fumarsäure, Fumarsäuredimethyl-, -diethyl-, -dipropyl- bzw. -dibutylester bzw. deren Säureimide oder -amide, 3-Trimethoxysilyl-1-Chlorpropan, N[2-(Trimethoxysilyl)ethyl]ethylendiamin, 3-Trimethoxysilyl-1-chlorpropan, Mercaptoethyl-, Mercaptopropyl-, Mercaptobutyltrimethoxy-bzw. - triethoxysilan, ferner Vinylencarbonat, Vinylsulfon, 3-Trimethoxysilyl-propyl-1-imidazol bzw. -carbazol. Die geeigneten Monomeren sind im allgemeinen solche, die mit den Polyolefinen nicht zu Blockcopolymerisaten reagieren.

Der Einbau von funktionellen Gruppen kann sowohl in der Schmelze mittels Extrudern oder anderen üblichen Spritzgußtechniken bei Temperaturen von ca. 140 °C bis 300 °C, vorzugsweise jedoch bei Temperaturen oberhalb des Schmelzbereichs der jeweils eingesetzten Polyolefine (vgl. hierzu G.M. Gale, Applied Organometallic Chemistry, 2, Seiten 17-31 (1988)) oder in einem geeigneten Lösungsmittel (vgl. hierzu DE-OS 1 546 982) vorgenommen werden. Zum Einbau von funktionellen Gruppen in Lösung wird die Pfropfreaktion im allgemeinen bei erhöhten Temperaturen von ca. 40 °C bis zum jeweiligen Siedepunkt des Lösungsmittels vorgenommen. Geeignete Lösungsmittel sind beispielsweise Xylol, Tetrachlorkohlenstoff, Toluol, Chlorbenzol, Tetralin, Kresol oder Gemische derartiger Lösungsmittel.

Die Reihenfolge der Reaktionen (Chlorierung bzw. Einbau der funktionellen Gruppen) ist unwesentlich.

Die erfindungswesentliche Komponente b) besteht aus mindestens einem OH-funktionellen hydrophoben Ester der bereits obengenannten Art. Die OH-Zahl dieser Ester liegt im allgemeinen bei 50 bis 600, vorzugsweise bei 50 bis 350 mg KOH/g. Die in den Estern vorliegenden Hydroxylgruppen können sowohl als Substituenten in den Kohlenwasserstoffketten der vorliegenden Monocarbonsäuren als auch in der Alkoholkomponente der Ester vorliegen. Diese Bedingung ist dann erfüllt, wenn die in den Estern vorliegenden mehrwertigen Alkohole nur teilweise mit Monocarbonsäuren verestert sind. Derartige Ester können beispielsweise durch Umesterung von natürlichen Fetten oder Ölen mit mehrwertigen Alkoholen hergestellt werden.

Als für die Komponente b) geeignete Ester werden vorzugsweise solche auf Basis von nachwachsenden Rohstoffen eingesetzt. Die Definition "nachwachsender Rohstoffe" kann beispielsweise der Literatur "Nachwachsende Rohstoffe und ihre Verwendung", AIO (Auswertungs- und Informationsdiest für Ernährung, Landwirtschaft und Forsten [AIO], 5300 Bonn [1992)] entnommen werden.

Zu den bevorzugten Estern gehören hydrophobe, OH-funktionelle Ester auf Basis von (i) 3- bis 6-wertigen Alkoholen des Molekulargewichtsbereichs 92 - 182 und (ii) aliphatischen $C_8$-$C_{22}$-Monocarbonsäuren.

Besonders bevorzugt sind OH-funktionelle Triglyceride oder Derivate von Triglyceriden oder Sorbitanestern von natürlichen, insbesondere olefinisch ungesättigten Fettsäuren. Die Überführung von solchen Estern in OH-funktionelle Derivate der erfindungsgemäß als Komponente b) in Betracht kommenden Art kann beispielsweise nach der bekannten Methode erfolgen, die darin besteht, die Ester der ungesättigten Fettsäuren nach dem in situ-Perameisensäure-Verfahren zu epoxidieren und anschließend die Epoxidgruppen durch Reaktion mit Alkoholen oder Säuren in Hydroxylgruppen zu überführen (vgl. hierzu B. Gruber et al. Fett Wissenschaft Technologie, Konradin-Industrieverlag GmbH, D-7022 Leinfelden-Echterdingen 1, 89, 147 (1987) und R. Höfe, Phänomen Farbe, Aktuelle Information für die Lackindustrie Press R. Wittsack, Ostlandstraße 1, D-5000 Köln 40, 4, S. 55 (1992)).

Zu den erfindungsgemäß besonders bevorzugt als Komponente b) geeigneten Estern gehören (i) OH-funktionelle Derivate von natürlichen Ölen und Fetten, d.h. insbesondere von Triglyceriden olefinisch ungesättigter aliphatischer $C_{16}$-$C_{18}$-Monocarbonsäuren wie z.B. 9-Hexadecensäure, 9-Octadecensäure (Ölsäure), 9,12-Octadecadien säure (Linolsäure), 9,12,15-Octadecatriensäure (Linolensäure und/oder 9,11,13-Octadecatriensäure, (ii) OH-funktionelle Derivate von Sorbitanestern derartiger Säuren und/oder (iii) Hydroxylgruppen aufweisende

Ester mehrwertiger Alkohole der genannten Art und gesättigten, aliphatischen $C_8$-$C_{22}$-, vorzugsweise $C_{12}$-$C_{18}$-Monocarbonsäuren. Als Komponente b) gut geeignet sind beispielsweise die von der Firma Henkel KGaA, D-4000 Düsseldorf unter der Bezeichnung ®Disponil SML 100 Spez. oder ®Sovermol Pol 1102/I vertriebenen, OH-funktionellen Ester. Als Komponente b) ebenfalls gut geeignet ist beispielsweise Rizinusöl.

Die erfindungsgemäß zu verwendenden Kombinationen aus den Einzelkomponenten a) + b) werden vorzugsweise lösungsmittelhaltigen Kunststofflacken als haftvermittelnde Zusätze einverleibt, wobei die Komponenten a) das eigentliche haftvermittelnde Zusatzmittel darstellt und die Komponente b) als Verträglichkeitsmacher und Haftverbesserer für die Komponente a) wirkt.

Bei den zur Kunststofflackierung eingesetzten Beschichtungsmitteln handelt es sich beispielsweise um solche, die als Bindemittel Ein- oder Zweikomponenten-Polyurethansysteme, Alkydharze, Melaminharze, gesättigte oder ungesättigte Polyesterharze, Alkydharze, Nitrocellulose, Kautschuktypen oder Polyamidharze enthalten. Vorzugsweise handelt es sich bei diesen Beschichtungsmitteln um lösungsmittelhaltige Lacke, die die üblichen Lacklösungsmittel wie beispielsweise Butylacetat, Methylethylketon, Methylisobutylketon, Methoxypropylacetat, Toluol, Xylol oder beliebige Gemische derartiger Lösungsmittel enthalten. Grundsätzlich geeignet ist jedoch auch die Verwendung von lösungsmittelarmen oder lösungsmittelfreien bzw. von wäßrigen Beschichtungsmitteln, in denen die erfindungswesentlichen Haftvermittler in den oben angegebenen Mengen vorliegen. Geeignete Beschichtungsmittel sind beispielsweise in H. Kittel, Lehrbuch der Lacke und Beschichtungen, Band IV, Seiten 76 bis 306, Verlag W.A. Colomb (1986) oder in dem gleichen Lehrbuch, Ausgabe 1976, Band IV, Seiten 328 bis 358 beschrieben.

Besonders bevorzugt handelt es sich bei den Beschichtungsmitteln um Ein- und insbesondere Zweikomponenten-Polyurethansysteme der an sich bekannten Art.

Geeignete Einkomponenten-Polyurethanlacke sind beispielsweise solche auf Basis von überwiegend linearen, voll ausreagierten Polyurethanen, die in organischen Lacklösungsmitteln der beispielhaft genannten Art löslich sind und keine reaktive Zentren mehr aufweisen, d.h. die physikalisch trocknen (siehe z.B. Kunststoff-Handbuch, Band 7 "Polyurethane", herausgegeben von Günter Oertel, Carl Hanser Verlag München/Wien (1983), Seite 551). Geeignete physikalisch trocknende Lacke dieses Typs sind beispielsweise jene, deren Binder auf einem ausreagierten linearen Polyurethan aus (i) einem Polyesterdiol, (ii) einem Kettenverlängerungsmittel und (iii) einem Diisocyanat basieren. Geeignete Polyesterdiole (i) zur Herstellung solcher Polyurethane sind beispielsweise Adipinsäure-Alkandiol-Polyesterdiole des Molekulargewichtsbereichs 600 bis 3000. Bei den Alkandiolen handelt es sich beispielsweise um Butandiol-1,4, Hexandiol-1,6, Neopentylglykol oder Mischungen derartiger Glykole. Geeignete Kettenverlängerungsmittel (ii) sind beispielsweise Diole der zur Herstellung der Polyesterdiole eingesetzten Art und auch Diamine wie Hexamethylendiamin oder Isophorondiamin. Geeignete Diisocyanate (iii) sind beispielsweise 4,4'-Diisocyanatodiphenylmethan oder Isophorondiisocyanat. Die Polyurethane werden in an sich bekannter Weise durch Umsetzung der Ausgangsmaterialien hergestellt, wobei ein Äquivalentverhältnis von Isocyanatgruppen gegenüber Isocyanatgruppen reaktionsfähiger Gruppen von ca. 0,9:1 bis 1,1:1 eingehalten wird.

Bei den besonders bevorzugten Zweikomponenten-Polyurethanlacken handelt es sich um solche, deren Bindemittel ein Zweikomponenten-Polyurethansystem darstellt wie sie beispielsweise in dem zuletzt zitierten Handbuch auf Seiten 541 bis 544 beschrieben werden. Die Zweikomponenten-Bindemittel dieser Lacke bestehen im allgemeinen aus einer Polyisocyanatkomponente und einer Polyolkomponente, wobei die Mengen dieser Komponenten einem molaren NCO/OH-Verhältnis von 0,5:1 bis 2:1, vorzugsweise 0,8:1 bis 1,5:1 entsprechen. Geeignete Polyisocyanate sind die bekannten Lackpolyisocyanate, beispielsweise Biuret-, Isocyanurat- oder Urethan-modifizierte Derivate einfacher Diisocyanate wie 2,4-Diisocyanatotoluol oder seine Mischungen mit 2,6-Diisocyanatotoluol und insbesondere 1,6-Diisocyanatohexan, wobei die genannten Derivate im allgemeinen 10 bis 25 Gew.-% Isocyanatgruppen enthalten.

Geeignete Polyole sind insbesondere Polyesterpolyole, Polyetherpolyole oder Polyacrylatpolyole.

Die Polyesterpolyole haben im allgemeinen ein Molekulargewicht von 500 bis 5000 und weisen mindestens 2, vorzugsweise 2 bis 6 Hydroxylgruppen pro Molekül auf.

Die Polyetherpolyole haben im allgemeinen ein Molekulargewicht von 500 bis 5000 und weisen 2 bis 3 Hydroxylgruppen pro Molekül auf.

Für das erfindungsgemäße Verfahren besonders geeignet sind Zweikomponenten-Polyurethanlacke, deren Polyolkomponente aus Polyacrylatharzen mit einem Hydroxylgruppengehalt von 0,5-12, vorzugsweise 0,8 bis 5,0 Gew.-% besteht. Unter diesen, an sich bekannten Polyacrylatharzen sind insbesondere solche bevorzugt, die insbesondere aus Methylmethacrylat, 2-Ethylhexylacrylat, Hydroxyethylmethacrylat, Acrylsäure und Styrol aufgebaut sind. Das gelpermeationschromatographisch unter Verwendung von Polystyrol als Standard ermittelte Molekulargewicht Mw dieser besonders bevorzugten Polyacrylatpolyole liegt im allgemeinen bei 5.000 bis 30.000, vorzugsweise bei 16.000 bis 22.000.

Die zur Anwendung gelangenden Beschichtungsmittel können im übrigen weitere Hilfs- und Zusatzmittel c) wie Katalysatoren, Pigmente, die bereits erwähnten Lösungsmittel, Verlaufhilfsmittel, Füllstoffe usw. enthalten.

Die Hilfs- und Zusatzmittel, insbesondere die erfindungsgemäßen Haftvermittler, werden im Falle der Verwendung in Zweikomponenten-Polyurethanlacken im allgemeinen der Polyolkomponente zugemischt.

Die Beschichtungsmittel, die die erfindungswesentlichen Haftvermittler a) und Hilfsmittel b) enthalten, eignen sich ausgezeichnet zur Beschichtung von thermoplastischen oder duroplastischen Kunststoffen der unterschiedlichsten Art. Sie eignen sich insbesondere zur Beschichtung von oftmals nicht ohne weiteres haftfest lackierbaren Polyolefinen einer Oberflächenspannung von mindestens 35 mN/m. Solche Polyolefine sind beispielsweise modifizierte und unmodifizierte teilkristalline oder amorphe Polypropylene und Polyethylene. Besonders bevorzugte Substrate für die erfindungsgemäßen Beschichtungsmittel sind Formkörper aus Polypropylen. Daneben sind beispielhaft auch Polyvinylidenfluorid, Polytetrafluorethylen, Ethylen-Propylen-Norbornadien-Kunststoffe, Acrylnitril-Butadien-Styrol-Copolymerisate, Polycarbonate, Polyamidkunststoffe, Polyester-, Polybutadien-, Polysilikone oder Celluloseester als geeignete Substrate zu nennen. Die mit den erfindungswesentlichen Zusätzen versehenen Beschichtungsmittel werden bei der Durchführung des erfindungsgemäßen Verfahrens im allgemeinen unter Einhaltung einer Trockenfilmstärke von 0,5 bis 100, vorzugsweise 20 bis 50 $\mu$m appliziert, wobei beliebige Methoden der Kunststofflackierung zur Anwendung gelangen können. Sie zeichnen sich durch ihre hervorragende Lösemittelstabilität aus.

Im Falle einer Mehrschichtlackierung enthält selbstverständlich der Grundlack das erfindungswesentliche Additiv, während die Verwendung gleicher oder analoger Additive in den übrigen Lackschichten fakultativ ist. Hiermit kann jedoch eine verbesserte Lackzwischenhaftung erzielt werden. Auch den nicht unmittelbar mit dem zu beschichtenden Kunststoff in Berührung kommenden Lackschichten werden in einem solchen Falle die Haftvermittler in den oben angegebenen Mengen zugesetzt.

Die erfindungsgemäß lackierten Kunststoffe können in den unterschiedlichsten Bereichen des täglichen Bedarfs zur Anwendung gelangen. Beispielhaft genannt seien der Automobilinnen- und -außenbereich, Elektro- und Elektronikgeräte, sowie Haushaltsgeräte der unterschiedlichsten Art. Sie zeichnen sich neben ihrer sehr guten Lackhaftung noch zusätzlich durch ihr hervorragendes Langzähverhalten aus.

## Beispiel 1

100 g amorphes Polyolefin auf Basis von Propylen, Ethylen und Isobuten mit einem Propylengehalt von 60 Gew.-% der Molmasse Mw 60.000 g/Mol ®Vestoplast PPV-08 der Fa. Hüls AG, D-4370 Marl werden zur Herstellug eines erfindungsgemäß geeigneten Haftvermittlers a) in 2000 g Tetrachlorkohlenstoff gelöst, anschließend werden der Lösung 12 g Trimethoxyvinylsilan und 1 g t-Butylperbenzoat bei 70 °Cim Verlaufe von einer Stunde unter $N_2$ zugetropft, die Lösung auf 10 °C abgekühlt und während eines Zeitraums von 60 Minuten unter fortwährender UV-Bestrahlung reines Chlor eingeleitet, bis die weitere Gewichtsaufnahme 48 g beträgt. Das so modifizierte Polymere wird dann in 5000 g Ethanol ausgefällt, 5 mal mit reinem Ethanol nachgewaschen und über Nacht getrocknet. Man erhält ein Haftvermittler a) mit der mittleren Molmasse von ca. 40 000 g/Mol. Es enthält 5 Gew.-% Sauerstoff und 2,2 Gew.-% Silizium bzw. 30 Gew.-% Chlor. Es ist in Xylol, Toluol, Butylacetat usw. löslich.

Eine 100 x 100 mm große, handelsübliche, modifizierte Polypropylenplatte der Fa. Hoechst AG des Typs ®Hostalen PPN 8018 wird durch Abblasen mit ionisierter Luft entladen und von Staubpartikeln befreit und dann mittels Spritzauftrag mit einem Zweikomponenten-Polyurethanlack beschichtet.

Die Polyolkomponente des Beschichtungsmittels bestand aus einem Gemisch aus

95 Gew.-Teilen eines Hydroxylgruppen aufweisenden Polyacrylatharzes mit einem Hydroxylgruppengehalt von 2,8 Gew.-% (®Desmophen A 365 der Fa. Bayer AG, D-5090 Leverkusen),

20 Gew.-Teilen einer 25 gew.-%igen xylolischen Lösung des oben genannten Haftvermittlers a),

10 Gew.-Teilen eines OH-Gruppen aufweisenden, hydrophoben Sorbitanesters der Laurinsäure ®Disponil SML 100 Spezial der Fa. Henkel KGaA, D-4000 Düsseldorf, OH-Zahl 350) ( = Komponente b)-),

49,3 Gew.-Teilen Talkum,

3,2 Gew.-Teilen Schwarzpigment (Ruß),

65,6 Gew.-Teilen Titandioxidpigment (Rutil),

4,8 Gew.-Teilen einer 10 %igen Lösung in Xylol eines handelsüblichen Schwebemittels (®Bentone der Fa. Kronos Titan GmbH, D-5090 Leverkusen) und

155 Gew.-Teilen eines Lösungsmittels, bestehend aus einem Gemisch aus Butylacetat und Xylol im Gewichtsverhältnis 1:1.

Die Polyisocyanatkomponente des Beschichtungsmittels bestand aus einer 75 %igen Lösung in Methoxypropylaceta/Xylol (1:1) eines Biuretpolyisocyanats auf Basis von 1,6-Diisocyanatohexan mit einem NCO-Gehalt der Lösung von 16,5 Gew.-% (®Desmodur N 75 der Bayer AG). Die Menge der Bindemittelkomponenten entspricht einem NCO/OH-Äquivalenrverhältnis von 1:1.

Nach erfolgter Applikation des Lacks wird während 10 Minuten abgelüftet und bei 70 °C getrocknet.

Es resultiert eine Beschichtung mit der Lackhaftung gemäß DIN 53 151 Gt O.

Zur Herstellung der vorstehend genannten Polykomponente wurde in einem ersten Schritt eine Lösung der drei erstgenannten Komponenten (Polyacrylatharz, xylolische Lösung des Haftvermittlers a) und Komponente b)) in den 155 Gew.-Teilen des genannten Lösungsmittelgemischs hergestellt. Die Zugabe der übrigen Hilfsmittel erfolgte erst zu einem späteren Zeitpunkt. Die genannte Lösung erwies sich bei Raumtemperatur über einen Zeitraum von mehr als 6 Monaten lagerstabil. Auch auf der Zentrifuge (Raumtemperatur, 3000 Umdrehungen/Minute) erfolgte eine Phasentrennung erst nach 55 Minuten.

## Vergleichsbeispiel 1

Eine Wiederholung von Beispiel 1 ohne Verwendung der erfindungswesentlichen Komponente b) ergab eine analoge Lösung (Polyacrylatharz, Komponente a) und Lösungsmittelgemisch), die bereits nach einwöchiger Lagerung bei Raumtemperatur 2 Phasen bildet. Auf der Zentrifuge (Raumtemperatur, 3000 Umdrehungen/Minute) wird eine entsprechende Phasentrennung bereits nach 7,5 Minuten beobachtet.

## Beispiel 2

Eine 100 x 100 mm große rußgefüllte und glasfaserverstärkte Polypropylenplatte der Fa. Hoechst AG wird nach Beispiel 1 mit einer Lackauflage versehen.

Es resultiert eine lackierte Platte mit einer hervorragenden Lackhaftung. Die Lackauflage weist einen Haftwert nach DIN 53151 Gt 0 auf und besteht problemlos sowohl den Kondenswasser- (DIN 50017-KK) als auch den Temperaturwechseltest (ASTM D 1211).

## Beispiel 3

100 g amorphes Polypropylen mit der mittleren Molmasse Mw 100.000 g/Mol werden zur Herstellung eines erfindungsgemäß geeigneten Haftvermittlers a) in 2000 g Tetrachlorkohlenstoff gelöst. Anschließend werden der Lösung 5 g Azobisisobutyronitril in 100 ml Tetrachlorkohlenstoff bei 75 °C im Verlaufe von 120 Minuten zugetropft und 3 Stunden bei 75 °C gerührt.

Anschließend wird in die Lösung während eines Zeitraums von 60 Minuten unter UV-Bestrahlung bei 0 °C Chlorgas eingeleitet. Dann wird der Tetrachlorkohlenstoff durch reines Xylol ausgetauscht. Man erhält eine klare Polymerlösung. Der Feststoffgehalt der Lösung liegt bei 25 Gew.-%. Das modifizierte Polypropylen weist einen Gehalt an Sauerstoff von 3,5 Gew.-% in Form von Hydroxyl-, Hydroperoxy-, Carboxyl- und Chlorcarbonylgruppen und außerdem 17,5 Gew.-% chemisch gebundenes Chlor auf. Die mittlere Molmasse Mw des Endproduktes liegt bei ca. 55.000 g/mol.

Eine 100 x 100 cm große Polypropylenplatte wird mittels Druckauftrag mit einem Zweikomponenten-Polyurethanlack unter Einhaltung einer Trockenfilmstärke von 15 µm beschichtet.

Die Polyolkomponente des Beschichtungsmittels bestand aus einer Mischung aus

97,5 Gew.-Teilen eines Polyesterpolyols mit einem Hydroxylgruppengehalt von 2,7 % (®Desmophen A 565 der Bayer AG),

20 Gew.-Teilen einer 25 gew.-%igen xylolischen Lösung des beschriebenen Haftvermittlers a),

10 Gew.-Teilen eines OH-funktionalisierten, hydrophoben Esters auf Basis von Glycerin und Sojaöl mit OH-Zahl 250 (®Sovermol Pol 1102/I der Fa. Henkel KGaA, D-4000 Düsseldorf = Komponente b)),

50 Gew.-Teilen Talkum,

3,7 Gew.-Teilen Schwarzpigment,

65,6 Gew.-Teilen Titandioxidpigment (Rutil) und

4,8 Gew.-Teilen der bereits in Beispiel 1 genannten Lösung des Schwebemittels.

155 Gew.-Teilen des in Beispiel 1 genannten Lösungsmittelgemischs

Die Polyisocyantkomponente des Beschichtungsmittels entspricht der in Beispiel 1 eingesetzten Polyisocyanatkomponente. Das NCO/OH-Äquivalenrverhältnis liegt bei 1:1. Nach Ablüftung und Trocknung wie in Beispiel 1 beschrieben resultiert eine Beschichtung mit der Lackhaftung Gt 0.

Aus weiteren Untersuchungen geht hervor, daß das verwendete Additiv auch bei mehrmonatiger Lagerung die Eigenschaften der Polyolkomponente nicht negativ beeinflußte. Ebenso blieb die Topfzeit der Lacklösung unverändert.

Die vorab hergestellte Lösung der drei erstgenannten Bestandteile der Polyolkomponente in dem genannten Lösungsmittelgemisch war ebenso lagerstabil wie die entsprechende Lösung gemäß Beispiel 1. Ein Verzicht auf die Mitverwendung der Komponente b) in einem Vergleichsversuch führte zu einer Lösung, die nach einwöchiger Lagerung bei Raumtemperatur 2 Phasen bildete.

**Beispiel 4**

Zur Herstellung eines erfindungsgemäß geeigneten Haftvermittlers a) werden 250 g amorphes Polypropylen der mittleren Molmasse Mw 90.000 g/Mol nach N.G. Gaylord, J. Polym. Sci., Polym. Lett. Ed., 21, Seiten 23-30 (1983) modifiziert, in 5000 g $CCl_4$ gelöst und dann bei UV-Bestrahlung unter $N_2$ chloriert, anschließend in Ethanol ausgefällt. Man erhält ein

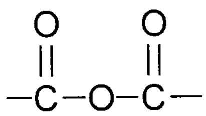

und $-CH_2-OH$-Gruppen aufweisendes Polypropylen mit 5,8 Gew.-% $O_2$, 10 Gew.-% $Cl_2$ und der mittleren Molmasse 40.000 g/Mol.

Entsprechend Beispiel 1 wurde eine Polyolkomponente hergestellt, wobei lediglich 20 Gew.-Teile einer 25 gew.-%igen Lösung des so hergestellten Haftvermittlers a) in Xylol anstelle des in Beispiel 1 eingesetzten Haftvermittlers a) Verwendung fanden. Die vorab hergestellte Lösung der drei erstgenannten Komponenten in dem genannten Lösungsmittelgemisch zeichnet sich bei Raumtemperatur durch eine Lagerstabilität von mehreren Monaten aus. Ein Verzicht auf die Mitverwendung der erfindungsgemäßwesentlichen Komponente b) führte zu einer entsprechenden Lösung, die nach 7-tägiger Lagerung bei Raumtemperatur 2 Phasen bildet.

**Beispiel 5**

Eine 100 x 100 cm grope EPDM-modifizierte (EPDM = Ethylen-Propylen-Dienmonomer-Kautschuk) Polypropylenplatte (®Keltan 0550 der Fa. DSM) wird mittels Druckauftrag mit einem Zweikomponenten-Polyurethanlack beschichtet.

Die Polyolkomponente des Beschichtungsmittels bestand aus

64,0 Gew.-Teilen eines Hydroxylgruppen aufweisenden Polyacrylatharzes mit einem Hydroxylgruppengehalt von 1,0 Gew.-% (50 %ig in Butylacetat/Xylol im Gewichtsverhältnis 1:1) (®Desmophen A 450 der Bayer AG, D-5090 Leverkusen),

6,4 Gew.-Teilen des Sorbitanesters nach Beispiel 1,

3,4 Gew.-Teilen einer 25 gew.-%igen xylolischen Lösung eines handelsüblichen, chlorierten Polyolefins mit einem Chlorgehalt von 23 Gew.-% auf Basis von amorphen Polypropylen einer unter 100.000 liegenden mittleren Molmasse Mw (CPO 343-3 der Fa. Eastman Chemical Company Coatings Inks and Resins Business Eng., P.O. Box 431 Kingspost, Tennesee 37 662),

35,4 Gew.-Teilen Titandioxid des Typs Bayertitan R-KB-2 der Fa. Bayer AG,

26,6 Gew.-Teilen Talkum,

24,8 Gew.-Teilen $CaCO_3$ des Typs Millicarb der Fa. Omya, D-5000 Köln,

1,8 Gew.-Teilen Schwarzpigment (Ruß),

11,8 Gew.-Teilen Schwebemittellösung nach Beispiel 1,

89,4 Gew.-Teilen Butylacetat/Xylol im Gewichtsverhältnis 1:1.

Die Polyisocyanatkomponente des Beschichtungsmittels bestand aus einer 90 gew.-%igen Lösung in Xylol eines aliphatischen Polyisocyanats mit einem NCO-Gehalt der Lösung von 9,5 Gew.-% (Ester-modifiziertes Trimerisat von 1,6-Diisocyanatohexan ®Desmodur VP LS 2010 der Bayer AG, Leverkusen). Die Menge der Bindemittelkomponenten entsprach einem NCO/OH-Äquivalentverhältnis von 1:1.

Nach erfolgter Applikation des Lacks wird die Probe nach Beispiel 1 abgelüftet und getrocknet. Es resultiert eine Beschichtung mit der Lackhaftung gemäß DIN 53151 Gt 0. Diese Auflage zeichnet sich durch ihre sehr gute Wetter-und Feuchtigkeitsfestigkeit aus.

Die zur Herstellung der Polyolkomponente vorab hergestellte Lösung der vorstehend drei erstgenannten Komponenten in dem zuletzt genannten Lösungsmittelgemisch erwies sich als über mehrere Monate lagerstabil.

**Patentansprüche**

1. Verfahren zur Lackierung von Kunststoffen unter Verwendung eines Beschichtungsmittels, welches neben einem Ein- oder Zweikomponenten-Bindemittel mindestens einen Haftvermittler a) in einer Menge von 1 bis 25 Gew.-%, bezogen auf das Gewicht des lösungsmittelfreien Bindemittels enthält, wobei der Haftvermittler ein chemisch modifiziertes Polyolefin mit einer mittleren Molmasse Mw von 10.000 bis 100.000 g/Mol, einem Chlorgehalt von 2,5 bis 50 Gew.-% und gegebenenfalls einem Gehalt an Stickstoff, Sauerstoff, Schwefel und/oder Silicium in Form von chemisch eingebauten funktionellen Gruppen von insgesamt 0 bis 15,0 Gew.-% darstellt, dadurch gekennzeichnet, daß man als weiteres Hilfsmittel b), gegebenenfalls neben sonstigen zusätzlich eingesetzten Hilfs- und Zusatzmitteln c), OH-funktionelle, hydrophobe Ester aus (i) mehrwertigen Alkoholen und (ii) aliphatischen $C_8$-$C_{22}$-Monocarbonsäuren des OH-Zahlbereichs 50-600 in einer Menge von 20 bis 80 Gew.-%, bezogen auf das Gesamtgewicht der Zusatzmittel a) + b), verwendet.

**2.** Verfahren gemäß Anspruch 1, dadurch gekennzeichnet, daß man als chemich modifiziertes Polyolefin ein chemisch modifiziertes amorphes Polypropylen oder ein chemisch modifiziertes amorphes Copolymerisat des Propylens mit bis zu 25 Gew.-%, bezogen auf das Gewicht aller Monomeren, an anderen olefinisch ungesättigten Monomeren oder Gemische von solchen chemisch modifizierten Polyolefinen verwendet.

**3.** Verfahren gemäß Anspruch 1 und 2, dadurch gekennzeichnet, daß man als Beschichtungsmittel ein solches verwendet, welches als Bindemittel ein Zweikomponenten-Polyurethansystem enthält.

**4.** Verfahren gemäß Anspruch 1 bis 3, dadurch gekennzeichnet, daß es sich bei dem zu lackierenden Substrat um amorphes oder teilkristallines, gegebenenfalls modifiziertes Polypropylen oder Polyethylen handelt.

**5.** Gemäß Anspruch 1 bis 4 lackierte Kunststoffe.

**6.** Verwendung von Kombinationen aus

a) chemisch modifizierten Polyolefinen einer mittleren Molmasse Mw von 10.000 bis 100.000 g/Mol, einem Chlorgehalt von 2,5 bis 50 Gew.-% und gegebenenfalls einem Gehalt an Stickstoff, Sauerstoff, Schwefel und/oder Silicium in Form von chemisch eingebauten funktionellen Gruppen von insgesamt 2,5 bis 15 Gew.-%

und

b) aus 20 bis 80 Gew.-%, bezogen auf das trockene Gewicht der Komponenten a) + b), OH-funktionellen, hydrophoben Estern aus (i) mehrwertigen Alkoholen und (ii) aliphatischen $C_8$-$C_{22}$-Monocarbonsäuren des OH-Zahlbereichs 50 bis 600

als die Haftvermittlung und Lagerstabilität verbessernde Zusatzmittel in Kunststofflacken auf Basis von Ein- oder Zweikomponenten-Bindemitteln.

Europäisches Patentamt

# EUROPÄISCHER RECHERCHENBERICHT

Nummer der Anmeldung
EP 94 11 2116

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 189 274 (MINNESOTA MINING AND MANUFACTURING COMPANY)<br>* Ansprüche 1-3,5 *<br>* Seite 4, Zeile 19 - Zeile 35 *<br>* Seite 5, Zeile 31 - Seite 6, Zeile 2 *<br>--- | 1,6 | C08J7/04<br>C09D175/04<br>//(C09D175/04, 123:28) |
| A | DATABASE WPI<br>Derwent Publications Ltd., London, GB;<br>AN 82-12872E[07]<br>& JP-A-57 003 863 (NIPPON ZEON KK.) 9. Januar 1982<br>* Zusammenfassung *<br>--- | 1 | |
| A | DATABASE WPI<br>Derwent Publications Ltd., London, GB;<br>AN 89-344234[47]<br>& JP-A-1 256 549 (CEMEDINE CO. LTD.) 13. Oktober 1989<br>* Zusammenfassung *<br>--- | 1 | |
| X | DD-A-131 091 (CHEMOPETROL)<br>* Ansprüche *<br>* Seite 4, Absatz 4 *<br>--- | 1 | **RECHERCHIERTE SACHGEBIETE (Int.Cl.6)**<br>C08J<br>C09D |
| A | DATABASE WPI<br>Derwent Publications Ltd., London, GB;<br>AN 80-04306C[03]<br>& JP-A-54 153 831 (OSAKA SODA KK.) 4. Dezember 1979<br>* Zusammenfassung *<br>--- | 1 | |
| D,A | WO-A-90 12056 (PPG INDUSTRIES)<br>* Anspruch 8 *<br>* Seite 6, Zeile 8 - Zeile 18 *<br>--- | 1 | |
| A | EP-A-0 478 277 (SUZUKI MOTOR CORPORATION)<br>* Anspruch 1 *<br>---<br>-/-- | 1 | |

Der vorliegende Recherchenbericht wurde für alle Patentansprüche erstellt

| Recherchenort | Abschlußdatum der Recherche | Prüfer |
|---|---|---|
| DEN HAAG | 14. Dezember 1994 | Niaounakis, M |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 94 11 2116

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | EP-A-0 430 002 (BAYER AG.)<br>* Ansprüche 1,3,6 *<br>----- | 1 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 14. Dezember 1994 | Niaounakis, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)